# EUROPEAN PATENT APPLICATION

(11) **EP 3 806 516 A1**
(43) Date of publication of application: **14.04.2021**
(21) Application number: 18922673.1
(22) Date of filing: 14.06.2018
(51) Int. Cl.: H04W 12/10

(54) **METHOD AND APPARATUS FOR CONTROLLING SECURITY FUNCTION, NETWORK DEVICE, AND TERMINAL DEVICE**

(71) Applicant: GUANGDONG OPPO MOBILE TELECOMMUNICATIONS CORP., LTD., Dongguan Guangdong 523860 (CN)
(72) Inventor: YANG, Ning, Dongguan, Guangdong 523860 (CN)
(74) Representative: Manitz Finsterwald Patent- und Rechtsanwaltspartnerschaft mbB
(86) International application number: PCT/CN2018/091362
(87) International publication number: WO 2019/237315

(57) **Abstract**

Disclosed by the present invention are a method and apparatus for controlling a security function, a network device, and a terminal device, the method comprising: a first node acquiring security policy configuration information and determining on the basis of the security policy configuration information whether the security function of each carrier among a plurality of carriers needs to be activated or deactivated; the first node sending a first message to a terminal, the first message carrying first configuration information, and the first configuration information being used to indicate whether the security function of each carrier among the plurality of carriers needs to be activated or deactivated.

## Description

### TECHNICAL FIELD

The disclosure relates to the technical field of wireless communication, and particularly to a method and device for controlling security function, a network device and a terminal device.

### BACKGROUND

For meeting the pursuits of people for rates, delays, high-speed mobility and energy efficiency of services as well as diversity and complexity of services in the future, the 3rd Generation Partnership Project (3GPP) international standards organization starts researching and developing 5th Generation (5G) mobile telecommunication technology.

Main application scenarios in 5G are Enhance Mobile Broadband (eMBB), Ultra Reliable Low Latency Communication (URLLC) and massive Machine Type Communication (mMTC).

During early deployment of New Radio (NR), it is difficult to implement complete NR coverage, and thus typical network coverage includes wide area Long Term Evolution (LTE) coverage and an NR island coverage mode. Moreover, LTE is mostly deployed below 6GHz and there are few spectrums for 5G below 6GHz, so that it is necessary to research application of spectrums above 6GHz for NR. However, a high frequency band is limited in coverage and fast in signal fading. Meanwhile, for protecting previous LTE investments of a mobile operating company, a working mode of tight interworking, i.e., a Dual Connectivity (DC) mode, between LTE and NR is proposed.

In LTE, there is no requirement made to integrity protection of a Data Radio Bearer (DRB). However, in NR, the requirement on integrity protection of DRB data is added, and thus each Packet Data Convergence Protocol (PDCP) Service Data Unit (SDU) is required to additionally contain a Message Authentication Code Integrity protection (MAC-I) part for integrity protection check.

In addition, in LTE, control-plane encryption and integrity protection are required, and user-plane data is encrypted by taking User Equipment (UE) as a granularity, namely a user-plane encryption function is activated for all bearers of UE when user-plane encryption is required. In NR, however, user-plane encryption and integrity protection are activated by taking a DRB as a granularity, that is, whether to activate the encryption function or not and whether to activate an integrity protection function or not are independently configured for each bearer, and the bearers are independently configured. Activation and deactivation of the encryption and integrity protection functions of each bearer may be completed through a synchronous reconfiguration flow only, that is, PDCP and Radio Link Control (RLC) may be reconstructed and Media Access Control (MAC) may be reset. Consequently, data may be lost. It can be seen that the synchronous reconfiguration flow is required on the premise of activating the encryption or integrity protection function on line without changing a key, and this may bring certain influence such as data packet loss and service interruption.

### SUMMARY

For solving the foregoing technical problem, embodiments of the disclosure provide a method and device for controlling security function, a network device and a communication device.

The embodiments of the disclosure provide a method for controlling security function, which includes the following operations.

A first node acquires a security policy configuration information and determines whether a security function of each bearer in multiple bearers is required to be activated or deactivated based on the security policy configuration information.

The first node sends a first message to a terminal. The first message contains a first configuration information and the first configuration information is configured to indicate whether the security function of each bearer in the multiple bearers is activated or deactivated.

In an implementation, the security function may include at least one of an encryption function or an integrity protection function.

The first message may be a Radio Resource Control (RRC) signaling, at least one of a respective first indication information or a respective second indication information may be configured for each bearer in the multiple bearers through the RRC signaling, the first indication information may be used to indicate whether the encryption function of the bearer is activated or deactivated, and the second indication information may be used to indicate whether the integrity protection function of the bearer is activated or deactivated.

In an implementation, the security function may include at least one of the encryption function or the integrity protection function.

The first message may include at least one of a first MAC Control Element (CE) or a second MAC CE. Each bit in the first MAC CE may be used to configure the respective first indication information for each bearer in the multiple bearers, and the first indication information may be used to indicate whether the encryption function of the bearer is activated or deactivated. Each bit in the second MAC CE may be used to configure the respective second indication information for each bearer in the multiple bearers, and the second indication information may be used to indicate whether the integrity protection function of the bearer is activated or deactivated.

In an implementation, the first MAC CE may correspond to a first logical channel Identifier (ID), and the first logical channel ID may be configured to identify that a type of the first MAC CE is used to configure the first indication information.

The second MAC CE may correspond to a second logical channel ID, and the second logical channel ID may be configured to identify that a type of the second MAC CE is used to configure the second indication information.

In an implementation, the security function may include at least one of the encryption function or the integrity protection function.

The first message may be a Physical Downlink Control Channel (PDCCH) order, and the PDCCH order may include at least one of a first bitmap or a second bitmap. Each bit in the first bitmap may be used to configure the respective first indication information for each bearer in the multiple bearers, and the first indication information may be used to indicate whether the encryption function of the bearer is activated or deactivated. Each bit in the second bitmap may be used to configure the respective second indication information for each bearer in the multiple bearers, and the second indication information may be used to indicate whether the integrity protection function of the bearer is activated or deactivated.

In an implementation, the first node may be a node in a standalone network; or,
the first node may be a Master Node (MN) in a DC network; or,
the first node may be a Secondary Node (SN) in the DC network.

In an implementation, under the condition that the first node is a node in the standalone network or the MN in the DC network, the first node may acquire the security policy configuration information from a Core Network (CN) element.

Under the condition that the first node is the SN in the DC network, the first node may receive the security policy configuration information forwarded by the MN in the DC network and sent from the CN element.

The security policy configuration information may be configured to indicate at least one of a Protocol Data Unit (PDU) session requiring the security function to be activated or a PDU session requiring the security function to be deactivated. The PDU session forms a correspondence with at least one bearer.

In an implementation, under the condition that the first node is the MN in the DC network,
the first configuration information in the first message sent by the first node may be configured to indicate whether the security function of each bearer in multiple bearers on an MN side in the DC network is activated or deactivated; or,
the first configuration information in the first message sent by the first node may be configured to indicate whether the security function of each bearer in multiple bearers on the MN side and SN side in the DC network is activated or deactivated.

In an implementation, under the condition that the first node is the SN in the DC network,
the first configuration information in the first message sent by the first node may be configured to indicate whether the security function of each bearer in multiple bearers on the SN side in the DC network is activated or deactivated; or,
the first configuration information in the first message sent by the first node may be configured to indicate whether the security function of each bearer in the multiple bearers on the MN side and SN side in the DC network is activated or deactivated.

In an implementation, a respective PDCP PDU corresponding to each bearer in the multiple bearers may contain a third indication information, and the third indication information may be used to indicate whether the security function of the bearer corresponding to the PDCP PDU is in an activated state or a deactivated state.

In an implementation, the security function may include at least one of the encryption function or the integrity protection function.

Whether the encryption function of the bearer corresponding to the PDCP PDU is in the activated state or the deactivated state may be indicated through a first bit in a header of the PDCP PDU; and/or, whether the integrity protection function of the bearer corresponding to the PDCP PDU is in the activated state or the deactivated state may be indicated through a second bit in the header of the PDCP PDU.

In an implementation, a respective control PDU may be generated for each bearer in the multiple bearers through a PDCP entity, and the control PDU may be configured to indicate whether the security function of the corresponding bearer is in the activated state or the deactivated state. The security function includes at least one of the encryption function or the integrity protection function.

The embodiments of the disclosure provide a method for controlling security function, which includes the following operation.

A terminal receives a first message sent by a first node. The first message contains a first configuration information and the first configuration information is configured to indicate whether a security function of each bearer in multiple bearers is activated or deactivated.

In an implementation, the security function may include at least one of an encryption function or an integrity protection function.

The first message may be an RRC signaling, and at least one of a respective first indication information or a respective second indication information may be configured for each bearer in the multiple bearers through the RRC signaling. The first indication information may be used to indicate whether the encryption function of the bearer is activated or deactivated, and the second indication information may be used to indicate whether the integrity protection function of the bearer is activated or deactivated.

In an implementation, the security function may include at least one of the encryption function or the integrity protection function.

The first message may include at least one of a first MAC CE or a second MAC CE. Each bit in the first MAC CE may be used to configure the respective first indication information for each bearer in the multiple bearers, and the first indication information may be used to indicate whether the encryption function of the bearer is activated or deactivated. Each bit in the second MAC CE may be used to configure the respective second indication information for each bearer in the multiple bearers, and the second indication information may be used to indicate whether the integrity protection function of the bearer is activated or deactivated.

In an implementation, the first MAC CE may correspond to a first logical channel ID, and the first logical channel ID may be configured to identify that a type of the first MAC CE is used to configure the first indication information.

The second MAC CE may correspond to a second logical channel ID, and the second logical channel ID may be configured to identify that a type of the second MAC CE is used to configure the second indication information.

In an implementation, the security function may include at least one of the encryption function or the integrity protection function.

The first message may be a PDCCH order, and the PDCCH order may include at least one of a first bitmap or a second bitmap. Each bit in the first bitmap may be used to configure the respective first indication information for each bearer in the multiple bearers, and the first indication information may be used to indicate whether the encryption function of the bearer is activated or deactivated. Each bit in the second bitmap may be used to configure the respective second indication information for each bearer in the multiple bearers, and the second indication information may be used to indicate whether the integrity protection function of the bearer is activated or deactivated.

In an implementation mode, the first node may be a node in a standalone network; or, the first node may be an MN in a DC network; or,
the first node may be an SN in the DC network.

In an implementation, under the condition that the first node is the MN in the DC network,
the first configuration information in the first message sent by the first node may be configured to indicate whether the security function of each bearer in multiple bearers on an MN side in the DC network is activated or deactivated; or,
the first configuration information in the first message sent by the first node may be configured to indicate whether the security function of each bearer in multiple bearers on the MN side and SN side in the DC network is activated or deactivated.

In an implementation, under the condition that the first node is the SN in the DC network,
the first configuration information in the first message sent by the first node may be configured to indicate whether the security function of each bearer in multiple bearers on the SN side in the DC network is activated or deactivated; or,
the first configuration information in the first message sent by the first node may be configured to indicate whether the security function of each bearer in the multiple bearers on the MN side and SN side in the DC network is activated or deactivated.

In an implementation, a respective PDCP PDU corresponding to each bearer in the multiple bearers may contain a third indication information, and the third indication information may be used to indicate whether the security function of the bearer corresponding to the PDCP PDU is in an activated state or a deactivated state.

In an implementation, the security function may include at least one of the encryption function or the integrity protection function.

Whether the encryption function of the bearer corresponding to the PDCP PDU is in the activated state or the deactivated state may be indicated through a first bit in a header of the PDCP PDU; and/or, whether the integrity protection function of the bearer corresponding to the PDCP PDU is in the activated state or the deactivated state may be indicated through a second bit in the header of the PDCP PDU.

In an implementation, a respective control PDU may be generated for each bearer in the multiple bearers through a PDCP entity, and the control PDU may be configured to indicate whether the security function of the corresponding bearer is in the activated state or the deactivated state. The security function includes at least one of the encryption function or the integrity protection function.

The embodiments of the disclosure provide a device for controlling security function, which includes an acquisition unit and a sending unit.

The acquisition unit is configured to acquire a security policy configuration information and determine whether a security function of each bearer in multiple bearers is required to be activated or deactivated based on the security policy configuration information.

The sending unit is configured to send a first message to a terminal. The first message contains a first configuration information and the first configuration information is configured to indicate whether the security function of each bearer in the multiple bearers is activated or deactivated.

In an implementation, the security function may include at least one of an encryption function or an integrity protection function.

The first message may be an RRC signaling, and at least one of a respective first indication information or a respective second indication information may be configured for each bearer in the multiple bearers through the RRC signaling. The first indication information may be used to indicate whether the encryption function of the bearer is activated or deactivated, and the second indication information may be used to indicate whether the integrity protection function of the bearer is activated or deactivated.

In an implementation, the security function may include at least one of the encryption function or the integrity protection function.

The first message may include at least one of a first MAC CE or a second MAC CE. Each bit in the first MAC CE may be used to configure the respective first indication information for each bearer in the multiple bearers, and the first indication information may be used to indicate whether the encryption function of the bearer is activated or deactivated. Each bit in the second MAC CE may be used to configure the respective second indication information for each bearer in the multiple bearers, and the second indication information may be used to indicate whether the integrity protection function of the bearer is activated or deactivated.

In an implementation, the first MAC CE may correspond to a first logical channel ID, and the first logical channel ID may be configured to identify that a type of the first MAC CE is used to configure the first indication information.

The second MAC CE may correspond to a second logical channel ID, and the second logical channel ID may be configured to identify that a type of the second MAC CE is used to configure the second indication information.

In an implementation, the security function may include at least one of the encryption function or the integrity protection function.

The first message may be a PDCCH order, and the PDCCH order may include at least one of a first bitmap or a second bitmap. Each bit in the first bitmap may be used to configure the respective first indication information for each bearer in the multiple bearers, and the first indication information may be used to indicate whether the encryption function of the bearer is activated or deactivated. Each bit in the second bitmap may be used to configure the respective second indication information for each bearer in the multiple bearers, and the second indication information may be used to indicate whether the integrity protection function of the bearer is activated or deactivated.

In an implementation, a first node may be a node in a standalone network; or,
the first node may be an MN in a DC network; or,
the first node may be an SN in the DC network.

In an implementation, under the condition that the first node is a node in the standalone network or the MN in the DC network, the acquisition unit may acquire the security policy configuration information from a CN element.

Under the condition that the first node is the SN in the DC network, the acquisition unit may receive the security policy configuration information forwarded by the MN in the DC network and sent from the CN element.

The security policy configuration information may be configured to indicate at least one of a PDU session requiring the security function to be activated or a PDU session requiring the security function to be deactivated. The PDU session forms a correspondence with at least one bearer.

In an implementation, under the condition that the first node is the MN in the DC network,
the first configuration information in the first message sent by the sending unit may be configured to indicate whether the security function of each bearer in multiple bearers on an MN side in the DC network is activated or deactivated; or,
the first configuration information in the first message sent by the sending unit may be configured to indicate whether the security function of each bearer in multiple bearers on the MN side and SN side in the DC network is activated or deactivated.

In an implementation, under the condition that the first node is the SN in the DC network,
the first configuration information in the first message sent by the sending unit may be configured to indicate whether the security function of each bearer in multiple bearers on the SN side in the DC network is activated or deactivated; or,
the first configuration information in the first message sent by the sending unit may be configured to indicate whether the security function of each bearer in the multiple bearers on the MN side and SN side in the DC network is activated or deactivated.

In an implementation, a respective PDCP PDU corresponding to each bearer in the multiple bearers may contain a third indication information, and the third indication information may be used to indicate whether the security function of the bearer corresponding to the PDCP PDU is in an activated state or a deactivated state.

In an implementation, the security function may include at least one of the encryption function or the integrity protection function.

Whether the encryption function of the bearer corresponding to the PDCP PDU is in the activated state or the deactivated state may be indicated through a first bit in a header of the PDCP PDU; and/or, whether the integrity protection function of the bearer corresponding to the PDCP PDU is in the activated state or the deactivated state may be indicated through a second bit in the header of the PDCP PDU.

In an implementation, a respective control PDU may be generated for each bearer in the multiple bearers through a PDCP entity, and the control PDU may be configured to indicate whether the security function of the corresponding bearer is in the activated state or the deactivated state. The security function includes at least one of the encryption function or the integrity protection function.

The embodiments of the disclosure provide a device for controlling security function, which includes a receiving unit.

The receiving unit is configured to receive a first message sent by a first node. The first message contains a first configuration information and the first configuration information is configured to indicate whether a security function of each bearer in multiple bearers is activated or deactivated.

In an implementation, the security function may include at least one of an encryption function or an integrity protection function.

The first message may be an RRC signaling, and at least one of a respective first indication information or a respective second indication information may be configured for each bearer in the multiple bearers through the RRC signaling. The first indication information may be used to indicate whether the encryption function of the bearer is activated or deactivated, and the second indication information may be used to indicate whether the integrity protection function of the bearer is activated or deactivated.

In an implementation, the security function may include at least one of the encryption function or the integrity protection function.

The first message may include at least one of a first MAC CE or a second MAC CE. Each bit in the first MAC CE may be used to configure the respective first indication information for each bearer in the multiple bearers, and the first indication information may be used to indicate whether the encryption function of the bearer is activated or deactivated. Each bit in the second MAC CE may be used to configure the respective second indication information for each bearer in the multiple bearers, and the second indication information may be used to indicate whether the integrity protection function of the bearer is activated or deactivated.

In an implementation, the first MAC CE may correspond to a first logical channel ID, and the first logical channel ID may be configured to identify that a type of the first MAC CE is used to configure the first indication information.

The second MAC CE may correspond to a second logical channel ID, and the second logical channel ID may be configured to identify that a type of the second MAC CE is used to configure the second indication information.

In an implementation, the security function may include at least one of the encryption function or the integrity protection function.

The first message may be a PDCCH order, and the PDCCH order may include at least one of a first bitmap or a second bitmap. Each bit in the first bitmap may be used to configure the respective first indication information for each bearer in the multiple bearers, and the first indication information may be used to indicate whether the encryption function of the bearer is activated or deactivated. Each bit in the second bitmap may be used to configure the respective second indication information for each bearer in the multiple bearers, and the second indication information may be used to indicate whether the integrity protection function of the bearer is activated or deactivated.

In an implementation, the first node may be a node in a standalone network; or,
the first node may be an MN in a DC network; or,
the first node may be an SN in the DC network.

In an implementation, under the condition that the first node is the MN in the DC network,
the first configuration information in the first message received by the receiving unit may be configured to indicate whether the security function of each bearer in multiple bearers on an MN side in the DC network is activated or deactivated; or,
the first configuration information in the first message received by the receiving unit may be configured to indicate whether the security function of each bearer in multiple bearers on the MN side and SN side in the DC network is activated or deactivated.

In an implementation, under the condition that the first node is the SN in the DC network,
the first configuration information in the first message received by the receiving unit may be configured to indicate whether the security function of each bearer in multiple bearers on the SN side in the DC network is activated or deactivated; or,
the first configuration information in the first message received by the receiving unit may be configured to indicate whether the security function of each bearer in the multiple bearers on the MN side and SN side in the DC network is activated or deactivated.

In an implementation, a respective PDCP PDU corresponding to each bearer in the multiple bearers may contain a third indication information, and the third indication information may be used to indicate whether the security function of the bearer corresponding to the PDCP PDU is in an activated state or a deactivated state.

In an implementation, the security function may include at least one of the encryption function or the integrity protection function.

Whether the encryption function of the bearer corresponding to the PDCP PDU is in the activated state or the deactivated state may be indicated through a first bit in a header of the PDCP PDU; and/or, whether the integrity protection function of the bearer corresponding to the PDCP PDU is in the activated state or the deactivated state may be indicated through a second bit in the header of the PDCP PDU.

In an implementation, a respective control PDU may be generated for each bearer in the multiple bearers through a PDCP entity, and the control PDU may be configured to indicate whether the security function of the corresponding bearer is in the activated state or the deactivated state. The security function includes at least one of the encryption function or the integrity protection function.

The embodiments of the disclosure provide a network device, which includes a processor and a memory. The memory is configured to store a computer program. The processor is configured to call and run the computer program stored in the memory to execute any abovementioned method for controlling security function.

The embodiments of the disclosure provide a terminal device, which includes a processor and a memory. The memory is configured to store a computer program. The processor is configured to call and run the computer program stored in the memory to execute any abovementioned method for controlling security function.

The embodiments of the disclosure provide a chip, which includes a processor, configured to call and run a computer program in a memory to enable a device installed with the chip to execute any abovementioned method for controlling security function.

The embodiments of the disclosure provide a computer-readable storage medium having stored therein a computer program which, when being executed by a computer, causes the computer to execute any abovementioned method for controlling security function.

The embodiments of the disclosure provide a computer program product, which includes a computer program instruction, the computer program instruction enabling a computer to execute any abovementioned method for controlling security function.

The embodiments of the disclosure provide a computer program, which enables a computer to execute any abovementioned method for controlling security function.

In the technical solutions of the embodiments of the disclosure, the first node acquires the security policy configuration information and determines whether the security function of each bearer in the multiple bearers is required to be activated or deactivated based on the security policy configuration information; and the first node sends the first message to the terminal, the first message containing the first configuration information and the first configuration information being configured to indicate whether the security function of each bearer in the multiple bearers is activated or deactivated. With adoption of the technical solutions in the embodiments of the disclosure, a network side modifies a security function state (activated or deactivated) of a certain bearer on line, and the security function state of each bearer is indicated through a network, so that the network side may modify a security state of the bearer on line, and a receiver can receive and decode data without errors. Therefore, the problem of data loss caused by wireless protocol stack reconstruction or resetting because of modification of the security function of the bearer is solved, and influence on a service is maximally reduced.

### BRIEF DESCRIPTION OF THE DRAWINGS

The drawings described herein are adopted to provide a further understanding to the disclosure and form a part of the application. Schematic embodiments of the disclosure and descriptions thereof are adopted to explain the disclosure and not intended to form improper limits to the disclosure. In the drawings:
FIG. 1 is an architecture diagram of a communication system according to an embodiment of the application.
FIG. 2 is a schematic diagram of a DC architecture according to an embodiment of the disclosure.
FIG. 3 is a first flowchart of a method for controlling security function according to an embodiment of the disclosure.
FIG. 4 is a second flowchart of a method for controlling security function according to an embodiment of the disclosure.
FIG. 5 is a schematic diagram of a MAC CE according to an embodiment of the disclosure.
FIG. 6 is a schematic diagram of a header of a PDCP PDU according to an embodiment of the disclosure.
FIG. 7 is a first structure composition diagram of a device for controlling security function according to an embodiment of the disclosure.
FIG. 8 is a second structure composition diagram of a device for controlling security function according to an embodiment of the disclosure.
FIG. 9 is a schematic structure diagram of a communication device according to an embodiment of the disclosure.
FIG. 10 is a schematic structure diagram of a chip according to an embodiment of the disclosure.
FIG. 11 is a schematic block diagram of a communication system according to an embodiment of the disclosure.

### DETAILED DESCRIPTION

The technical solutions in the embodiments of the disclosure will be described below in combination with the drawings in the embodiments of the disclosure. It is apparent that the described embodiments are not all embodiments but part of embodiments of the disclosure. All other embodiments obtained by those of ordinary skill in the art based on the embodiments in the disclosure without creative work shall fall within the scope of protection of the disclosure.

The technical solutions in the embodiments of the disclosure may be applied to various communication systems, for example, a Global System of Mobile communication (GSM), a Code Division Multiple Access (CDMA) system, a Wideband Code Division Multiple Access (WCDMA) system, a General Packet Radio Service (GPRS) system, an LTE system, an LTE Frequency Division Duplex (FDD) system, an LTE Time Division Duplex (TDD) system, a Universal Mobile Telecommunication System (UMTS), a Worldwide Interoperability for Microwave Access (WiMAX) communication system or a future 5G system.

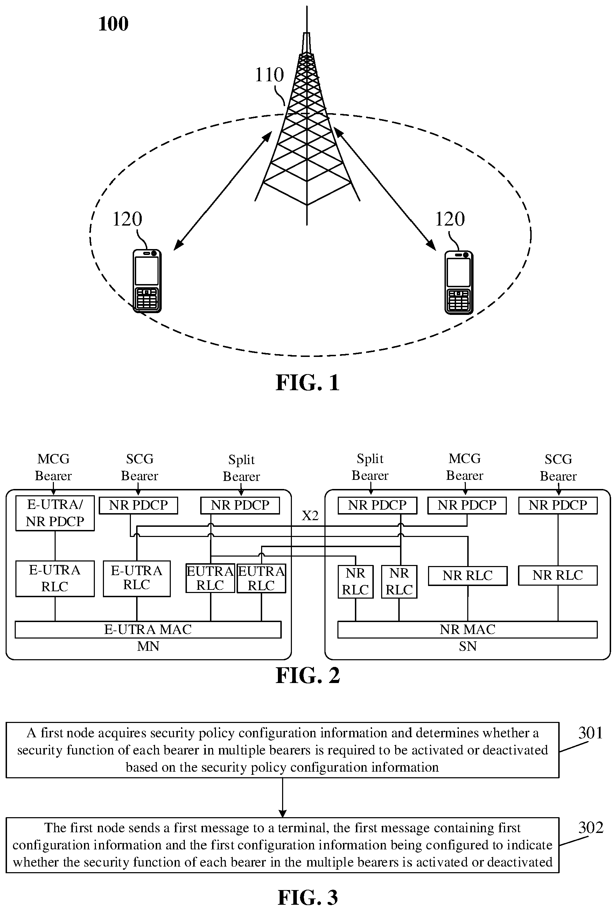

Exemplarily, a communication system 100 that the embodiments of the disclosure are applied to is shown in FIG. 1. The communication system 100 may include a network device 110, and the network device 110 may be a device communicating with a terminal device 120 (or called a communication terminal or a terminal). The network device 110 may provide communication coverage for a specific geographical region and may communicate with a terminal device located in the coverage. Optionally, the network device 110 may be a Base Transceiver Station (BTS) in the GSM or the CDMA system, may also be a NodeB (NB) in the WCDMA system, and may further be an Evolutional Node B (eNB or eNodeB) in the LTE system or a wireless controller in a Cloud Radio Access Network (CRAN). The network device may also be a mobile switching center, a relay station, an access point, a vehicle device, a wearable device, a hub, a switch, a network bridge, a router, a network-side device in a future 5G network, a network device in a future evolved Public Land Mobile Network (PLMN) or the like.

The communication system 100 further includes at least one terminal device 120 within the coverage of the network device 110. A "terminal device" used herein includes, but not limited to, a device arranged to receive/send a communication signal through a wired line connection, for example, through Public Switched Telephone Network (PSTN), Digital Subscriber Line (DSL), digital cable and direct cable connections, and/or another data connection/network, and/or through a wireless interface, for example, through a cellular network, a Wireless Local Area Network (WLAN), a digital television network like a Digital Video Broadcasting-Handheld (DVB-H) network, a satellite network and an Amplitude Modulated (AM)-Frequency Modulated (FM) broadcast transmitter, and/or via another communication terminal, and/or an Internet of Things (IoT) device. The terminal device arranged to communicate through a wireless interface may be called a "wireless communication terminal", a "wireless terminal" or a "mobile terminal." Examples of a mobile terminal include, but not limited to, a satellite or cellular telephone, a Personal Communication System (PCS) terminal capable of combining a cellular radio telephone and data processing, faxing and data communication capabilities, a Personal Digital Assistant (PDA) capable of including a radio telephone, a pager, Internet/intranet access, a Web browser, a notepad, a calendar and/or a Global Positioning System (GPS) receiver, and a conventional laptop and/or palmtop receiver or another electronic device including a radio telephone transceiver. The terminal device may refer to an access terminal, UE, a user unit, a user station, a mobile station, a mobile radio station, a remote station, a remote terminal, a mobile device , a user terminal, a terminal, a wireless communication device, a user agent or a user device. The access terminal may be a cell phone, a cordless phone, a Session Initiation Protocol (SIP) phone, a Wireless Local Loop (WLL) station, a PDA, a handheld device with a wireless communication function, a computing device, another processing device connected to a wireless modem, a vehicle device, a wearable device, a terminal device in the 5G network, a terminal device in the future evolved PLMN or the like.

Optionally, the terminal device 120 may perform Device to Device (D2D) communication with another terminal device.

Optionally, the 5G system or the 5G network may also be called an NR system or an NR network.

A network device and two terminal devices are exemplarily shown in FIG. 1. Optionally, the communication system 100 may include multiple network devices and another number of terminal devices may be included in coverage of each network device. There are no limits made thereto in the embodiments of the disclosure.

Optionally, the communication system 100 may further include other network entities such as a network controller and a mobility management entity. There are no limits made thereto in the embodiments of the disclosure.

It is to be understood that a device with a communication function in the network/system in the embodiments of the disclosure may be called a communication device. For example, for the communication system 100 shown in FIG. 1, communication devices may include the network device 110 and terminal device 120 with the communication function, and the network device 110 and the terminal device 120 may be the specific devices mentioned above and will not be elaborated herein. The communication devices may further include other devices in the communication system 100, for example, other network entities like a network controller and a mobility management entity. There are no limits made thereto in the embodiments of the disclosure.

It is to be understood that terms "system" and "network" in the disclosure may usually be used interchangeably. In the disclosure, term "and/or" is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

The technical solutions in the embodiments of the disclosure are mainly applied to a 5G system. Of course, the technical solutions in the embodiments of the disclosure are not limited to the 5G system and may also be applied to mobile communication systems of other types. Main application scenarios in the 5G system will be described below.
1) An eMBB scenario: eMBB aims to enable a user to obtain a multimedia content, service and data, and service requirements thereof increase rapidly. Since eMBB may be deployed in different scenarios, for example, a room, an urban area and a rural area, and service capabilities and requirements thereof are also greatly different, it is necessary to analyze a service in combination with a specific deployment scenario.
2) A URLLC scenario: typical applications of URLLC include industrial automation, power automation, remote medical operation, traffic safety guarantee and the like.
3) An mMTC scenario: typical characteristics of mMTC include high connection density, small data volume, delay-insensitive services, low cost and long service life of modules and the like.

5G may be combined with LTE to form a DC network architecture. Types of the DC include Evolved-UMTS Terrestrial Radio Access (EUTRA)-NR DC (EN-DC), NR-EUTRA DC (NE-DC), 5G Core (5GC)-EN-DC and NR DC. In EN-DC, an LTE node serves as an MN, an NR node serves as an SN, and an Evolved Packet Core (EPC) is connected. In NE-DC, an NR node serves as an MN, an Enhanced LTE (eLTE) node serves as an SN, and a 5GC is connected. In 5GC-EN-DC, an eLTE node serves as an MN, an NR node serves as an SN, and a 5GC is connected. In NR DC, an NR node serves as an MN, an NR node serves as an SN, and a 5GC is connected.

In LTE DC, bearer types on a user-plane include a Master Cell Group (MCG) bearer, a Secondary Cell Group (SCG) bearer and an MCG split bearer. Based on this, for improving the data transmission reliability, EN-DC proposes an SCG split bearer, referring to FIG. 2. The MCG split bearer and the SCG split bearer are mainly different in functions and keys in the PDCP-layer.

For minimizing a change between an MCG split bearer and an SCG split bearer, reducing work for standardization, implementation and test and minimizing differentiation of characteristics of market products, a concept of bearer harmonization is proposed, namely the MCG split bearer and the SCG split bearer are harmonized to the same bearer type, i.e., split bearer. That is, any split form is transparent for UE.

In LTE, there is no requirement made to integrity protection of a DRB. However, in NR, the requirement on integrity protection of DRB data is added, and thus each PDCP SDU is required to additionally contain a MAC-I part for integrity protection check. In addition, in LTE, control-plane encryption and integrity protection are required, and user-plane data is encrypted by taking UE as a granularity, namely a user-plane encryption function is activated for all bearers of UE when user-plane encryption is required. In NR, user-plane encryption and integrity protection are activated by taking a DRB as a granularity, that is, whether to activate the encryption function or not and whether to activate an integrity protection function or not are independently configured for each bearer, and the bearers are independently configured. Activation and deactivation of the encryption and integrity protection functions of each bearer may be completed through a synchronous reconfiguration flow only, that is, PDCP and RLC may be reconstructed and MAC may be reset, and consequently, data may be lost. It can be seen that the synchronous reconfiguration flow is required on the premise of activating the encryption or integrity protection function on line without changing a key, and this may bring certain influence such as data packet loss and service interruption. In view of this, the embodiments of the disclosure disclose a method for activating and/or deactivating a security function on line, which controls whether to activate encryption and/or integrity protection function of a bearer or not by taking the bearer as a granularity.

FIG. 3 is a first flowchart of a method for controlling security function according to an embodiment of the disclosure. As shown in FIG. 3, the method for controlling security function includes the following operations.

At block 301, a first node acquires security policy configuration information and determines whether a security function of each bearer in multiple bearers is required to be activated or deactivated based on the security policy configuration information.

In the embodiment of the disclosure, the first node may be any one of the following types.
1) The first node is a node in a standalone network.
2) The first node is an MN in a DC network.
3) The first node is an SN in the DC network.

For the DC network, there is made such a hypothesis that the master node in the DC network is MN and the secondary node is SN. A terminal reports a security algorithm capability (including an NR security algorithm capability and/or an LTE security algorithm capability) supported by the terminal to a CN side through an NR Non-Access Stratum (NAS) message. When the terminal enters a connected state, the CN transmits the security algorithm capability of the terminal to the MN, and the MN selects a security algorithm for UE to use on an MN side according to the security algorithm capability supported by the terminal and a security algorithm capability supported by the MN. In a process for adding the SN, the MN may further send the security algorithm capability supported by the terminal on an SN side to the SN, and the SN selects a security algorithm for the UE to use on the SN side according to a security algorithm capability supported by the SN and the security algorithm capability supported by the terminal. Herein, the security algorithm includes an encryption algorithm and/or an integrity protection algorithm.

In the embodiment of the disclosure, 1) under the condition that the first node is a node in the standalone network or the MN in the DC network, the first node acquires the security policy configuration information from a CN element; and 2) under the condition that the first node is the SN in the DC network, the first node receives the security policy configuration information forwarded by the MN in the DC network and sent from the CN element.

The security policy configuration information is configured to indicate a PDU session requiring the security function to be activated and/or a PDU session requiring the security function to be deactivated. The PDU session forms a correspondence with at least one bearer.

In the embodiment of the disclosure, under the condition that the first node is the MN in the DC network,
first configuration information in a first message sent by the first node is configured to indicate whether the security function of each bearer in multiple bearers on an MN side in the DC network is activated or deactivated; or,
the first configuration information in the first message sent by the first node is configured to indicate whether the security function of each bearer in multiple bearers on the MN side and SN side in the DC network is activated or deactivated.

For example, the MN in the DC network receives the security policy configuration information from the CN (for example, a Session Management Function (SMF) or an Access and Mobility Management Function (AMF)), and the security policy configuration information indicates which PDU session requiring a user-plane encryption function and/or a user-plane integrity protection function to be activated. In the process for adding the SN, the MN may send the security policy configuration information to the SN for the SN to control activation and deactivation of the security function, or the MN is not required to forward the security policy configuration information to the SN and activation and deactivation of the security function are always controlled by the MN.

In the embodiment of the disclosure, under the condition that the first node is the SN in the DC network,
the first configuration information in the first message sent by the first node is configured to indicate whether the security function of each bearer in multiple bearers on the SN side in the DC network is activated or deactivated; or,
the first configuration information in the first message sent by the first node is configured to indicate whether the security function of each bearer in the multiple bearers on the MN side and SN side in the DC network is activated or deactivated.

In the embodiment of the disclosure, the security function is controlled by taking a DRB as a granularity. Furthermore, the security function of each bearer includes an encryption function and/or an integrity protection function.

At block 302, the first node sends a first message to a terminal. The first message contains first configuration information and the first configuration information is configured to indicate whether the security function of each bearer in the multiple bearers is activated or deactivated.

In the embodiment of the disclosure, a network side configures the encryption function and/or integrity protection function for each bearer respectively, which may be implemented in the following manners.

In a first manner, the first message is an RRC signaling. A respective first indication information and/or second indication information are/is configured for each bearer in the multiple bearers through the RRC signaling. The first indication information is used to indicate whether the encryption function of the bearer is activated or deactivated, and the second indication information is used to indicate whether the integrity protection function of the bearer is activated or deactivated.

In a second manner, the first message includes a first MAC CE and/or a second MAC CE. Each bit in the first MAC CE is used to configure the respective first indication information for each bearer in the multiple bearers, and the first indication information is used to indicate whether the encryption function of the bearer is activated or deactivated. Each bit in the second MAC CE is used to configure the respective second indication information for each bearer in the multiple bearers, and the second indication information is used to indicate whether the integrity protection function of the bearer is activated or deactivated.

Herein, for reflecting functions of the first MAC CE and the second MAC CE, the first MAC CE corresponds to a first logical channel ID, and the first logical channel ID is configured to identify that a type of the first MAC CE is used to configure the first indication information; and the second MAC CE corresponds to a second logical channel ID, and the second logical channel ID is configured to identify that a type of the second MAC CE is used to configure the second indication information.

In a third manner, the first message is a PDCCH order. The PDCCH order includes a first bitmap and/or a second bitmap. Each bit in the first bitmap is used to configure the respective first indication information for each bearer in the multiple bearers, and the first indication information is used to indicate whether the encryption function of the bearer is activated or deactivated. Each bit in the second bitmap is used to configure the respective second indication information for each bearer in the multiple bearers, and the second indication information is used to indicate whether the integrity protection function of the bearer is activated or deactivated.

In an implementation, a respective PDCP PDU corresponding to each bearer in the multiple bearers contains third indication information, and the third indication information is used to indicate whether the security function of the bearer corresponding to the PDCP PDU is in an activated state or a deactivated state. Furthermore, considering that the security function includes the encryption function and/or the integrity protection function, whether the encryption function of the bearer corresponding to the PDCP PDU is in the activated state or the deactivated state is indicated through a first bit in a header of the PDCP PDU; and/or, whether the integrity protection function of the bearer corresponding to the PDCP PDU is in the activated state or the deactivated state is indicated through a second bit in the header of the PDCP PDU.

In an implementation, a respective control PDU is generated for each bearer in the multiple bearers through a PDCP entity, and the control PDU is configured to indicate whether the security function of the corresponding bearer is in the activated state or the deactivated state. The security function includes the encryption function and/or the integrity protection function.

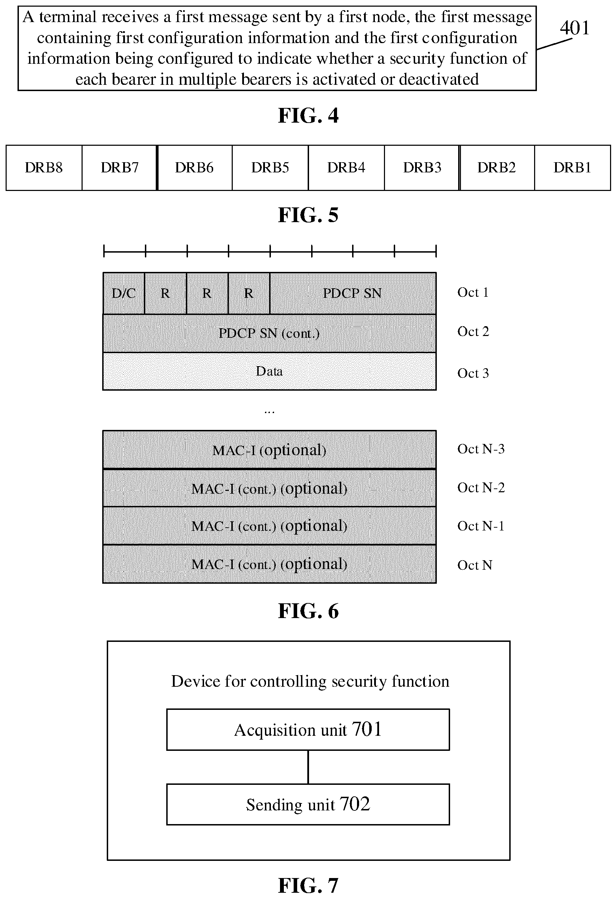

FIG. 4 is a second flowchart of a method for controlling security function according to an embodiment of the disclosure. As shown in FIG. 4, the method for controlling security function includes the following operations.

At block 401, a terminal receives a first message sent by a first node, the first message containing first configuration information and the first configuration information being configured to indicate whether a security function of each bearer in multiple bearers is activated or deactivated.

In the embodiment of the disclosure, the first node may be any one of the following types.
1) The first node is a node in a standalone network.
2) The first node is an MN in a DC network.
3) The first node is an SN in the DC network.

In the embodiment of the disclosure, under the condition that the first node is the MN in the DC network,
the first configuration information in the first message sent by the first node is configured to indicate whether the security function of each bearer in multiple bearers on an MN side in the DC network is activated or deactivated; or,
the first configuration information in the first message sent by the first node is configured to indicate whether the security function of each bearer in multiple bearers on the MN side and SN side in the DC network is activated or deactivated.

In the embodiment of the disclosure, under the condition that the first node is the SN in the DC network,
the first configuration information in the first message sent by the first node is configured to indicate whether the security function of each bearer in multiple bearers on the SN side in the DC network is activated or deactivated; or,
the first configuration information in the first message sent by the first node is configured to indicate whether the security function of each bearer in the multiple bearers on the MN side and SN side in the DC network is activated or deactivated.

In the embodiment of the disclosure, the security function is controlled by taking a DRB as a granularity. Furthermore, the security function of each bearer includes an encryption function and/or an integrity protection function.

In the embodiment of the disclosure, a network side configures the encryption function and/or integrity protection function for each bearer respectively, which may be implemented in the following manners.

In a first manner, the first message is RRC signaling. A respective first indication information and/or second indication information are/is configured for each bearer in the multiple bearers through the RRC signaling. The first indication information is used to indicate whether the encryption function of the bearer is activated or deactivated, and the second indication information is used to indicate whether the integrity protection function of the bearer is activated or deactivated.

In a second manner, the first message includes a first MAC CE and/or a second MAC CE. Each bit in the first MAC CE is used to configure the respective first indication information for each bearer in the multiple bearers, and the first indication information is used to indicate whether the encryption function of the bearer is activated or deactivated. Each bit in the second MAC CE is used to configure the respective second indication information for each bearer in the multiple bearers, and the second indication information is used to indicate whether the integrity protection function of the bearer is activated or deactivated.

Herein, for reflecting functions of the first MAC CE and the second MAC CE, the first MAC CE corresponds to a first logical channel ID, and the first logical channel ID is configured to identify that a type of the first MAC CE is used to configure the first indication information; and the second MAC CE corresponds to a second logical channel ID, and the second logical channel ID is configured to identify that a type of the second MAC CE is used to configure the second indication information.

In a third manner, the first message is a PDCCH order. The PDCCH order includes a first bitmap and/or a second bitmap. Each bit in the first bitmap is used to configure the respective first indication information for each bearer in the multiple bearers, and the first indication information is used to indicate whether the encryption function of the bearer is activated or deactivated. Each bit in the second bitmap is used to configure the respective second indication information for each bearer in the multiple bearers, and the second indication information is used to indicate whether the integrity protection function of the bearer is activated or deactivated.

In an implementation, a respective PDCP PDU corresponding to each bearer in the multiple bearers contains third indication information, and the third indication information is used to indicate whether the security function of the bearer corresponding to the PDCP PDU is in an activated state or a deactivated state. Furthermore, considering that the security function includes the encryption function and/or the integrity protection function, whether the encryption function of the bearer corresponding to the PDCP PDU is in the activated state or the deactivated state is indicated through a first bit in a header of the PDCP PDU; and/or, whether the integrity protection function of the bearer corresponding to the PDCP PDU is in the activated state or the deactivated state is indicated through a second bit in the header of the PDCP PDU.

In an implementation, a respective control PDU is generated for each bearer in the multiple bearers through a PDCP entity, and the control PDU is configured to indicate whether the security function of the corresponding bearer is in the activated state or the deactivated state. The security function includes the encryption function and/or the integrity protection function.

The technical solutions in the embodiments of the disclosure will be exemplarily described below in combination with specific examples.

### A first application example: the MN controls the security function of the bearer.

For encryption and integrity protection of each bearer (DRB), the MN controls activation and deactivation of the security function of the bearer respectively, and the MN may configure the security function of each bearer in form of RRC signaling, or a MAC CE or a PDCCH order.

For the RRC signaling, two pieces of indication information are configured for each bearer through the RRC signaling. One piece of indication information is used to activate/deactivate the user-plane encryption function and the other piece of indication information is used to activate/deactivate the user-plane integrity protection function.

For the MAC CE, two MAC CEs are defined. One MAC CE is configured to control the encryption function and the other MAC CE is configured to control the integrity protection function. Specifically, the MAC CE includes all configured DRBs. For example, for the condition that eight DRBs are configured, each bit corresponds to an activated state of the security function of a DRB. For example, 1 indicates activation and 0 represents deactivation. Referring to FIG. 5, a sequence from DRB1 to DRB8 is determined according to a DRB configuration sequence or a sequence from small to large DRB IDs. In addition, a new logical channel ID is defined for the MAC CE to identify the type of the MAC CE.

For the PDCCH order, two bitmaps may be included. One bitmap is used to control the encryption function and the other bitmap is used to control the integrity protection function. The bitmap includes all the configured DRBs. For example, for the condition that eight DRBs are configured, each bit corresponds to the activated state of the security function of a DRB. For example, 1 indicates activation and 0 represents deactivation. DRB1 to DRB8 are mapped from a lower bit to a higher bit of the bitmap according to the DRB configuration sequence or the sequence from small to large DRB IDs.

### A second application example: the MN and the SN control the security functions of their own bearers respectively.

For encryption and integrity protection of the bearers (DRBs) on the MN side, the MN controls activation and deactivation of the security functions thereof, and the MN may configure the security function of each bearer in form of RRC signaling, or a MAC CE or a PDCCH order. For encryption and integrity protection of the bearers (DRBs) on the SN side, the SN controls activation and deactivation of the security functions thereof. Similarly, the SN may configure the security function of each bearer in form of RRC signaling, or a MAC CE or a PDCCH order.

Not limited to the above application examples, the order generated by the SN may also be oriented to all the bearers, and like the MN side controlling the security functions of the bearers in the first application example, the SN side controls the security functions of the bearers. Elaborations are omitted herein.

Not limited to the above application examples, a base station in a standalone network may also adopt the solution that the MN side controls the security functions of the bearers in the first application example. Elaborations are omitted herein.

### A third application example

After the integrity protection function of a certain bearer is activated or deactivated, a data format may change. That is, there may be a 32bit MAC-I at the end of each PDCP PDU. If the integrity protection function of the bearer is activated, the 32bit MAC-I exists, otherwise the 32bit MAC-I does not exist.

After the encryption function of a certain bearer is activated or deactivated, a receiver may perform decryption or not perform decryption, and consequently, data transmitted to an upper layer may be influenced.

For enabling the receiver (which may be an uplink base station and may also be a downlink terminal) to learn a security state of a data packet, a sender (which may be an uplink terminal and may also be a downlink base station) may perform the following processing.

In a first processing manner, two indicating bits are added to a header of each PDCP PDU (for example, existing reserved bits, i.e., R bits, are used) to indicate the security state of the bearer. One indicating bit is used to indicate a state of the integrity protection function of the bearer and the other indicating bit is used to indicate a state of the encryption function of the bearer. For example, 1 represents activation and 0 represents deactivation, referring to FIG. 6.

In a second processing manner, for a bearer of which a security state is to be modified, the PDCP generates a control PDU, and the control PDU indicates a subsequent state of the security function.

FIG. 7 is a first structure composition diagram of a device for controlling security function according to an embodiment of the disclosure. As shown in FIG. 7, the device includes an acquisition unit 701 and a sending unit 702.

The acquisition unit 701 is configured to acquire security policy configuration information and determine whether a security function of each bearer in multiple bearers is required to be activated or deactivated based on the security policy configuration information.

The sending unit 702 is configured to send a first message to a terminal. The first message contains first configuration information and the first configuration information is configured to indicate whether the security function of each bearer in the multiple bearers is activated or deactivated.

In an implementation, the security function includes an encryption function and/or an integrity protection function.

The first message is RRC signaling. A respective first indication information and/or second indication information are/is configured for each bearer in the multiple bearers through the RRC signaling. The first indication information is used to indicate whether the encryption function of the bearer is activated or deactivated, and the second indication information is used to indicate whether the integrity protection function of the bearer is activated or deactivated.

In an implementation, the security function includes the encryption function and/or the integrity protection function.

The first message includes a first MAC CE and/or a second MAC CE. Each bit in the first MAC CE is used to configure the respective first indication information for each bearer in the multiple bearers, and the first indication information is used to indicate whether the encryption function of the bearer is activated or deactivated. Each bit in the second MAC CE is used to configure the respective second indication information for each bearer in the multiple bearers, and the second indication information is used to indicate whether the integrity protection function of the bearer is activated or deactivated.

In an implementation, the first MAC CE corresponds to a first logical channel ID, and the first logical channel ID is configured to identify that a type of the first MAC CE is used to configure the first indication information.

The second MAC CE corresponds to a second logical channel ID, and the second logical channel ID is configured to identify that a type of the second MAC CE is used to configure the second indication information.

In an implementation, the security function includes the encryption function and/or the integrity protection function.

The first message is a PDCCH order. The PDCCH order includes a first bitmap and/or a second bitmap. Each bit in the first bitmap is used to configure the respective first indication information for each bearer in the multiple bearers, and the first indication information is used to indicate whether the encryption function of the bearer is activated or deactivated. Each bit in the second bitmap is used to configure the respective second indication information for each bearer in the multiple bearers, and the second indication information is used to indicate whether the integrity protection function of the bearer is activated or deactivated.

In an implementation, the first node is a node in a standalone network; or,
the first node is an MN in a DC network; or,
the first node is an SN in the DC network.

In an implementation, under the condition that the first node is a node in the standalone network or the MN in the DC network, the acquisition unit 701 is configured to acquire the security policy configuration information from a CN element.

Under the condition that the first node is the SN in the DC network, the acquisition unit 701 is configured to receive the security policy configuration information forwarded by the MN in the DC network and sent from the CN element.

The security policy configuration information is configured to indicate a PDU session requiring the security function to be activated and/or a PDU session requiring the security function to be deactivated. The PDU session forms a correspondence with at least one bearer.

In an implementation, under the condition that the first node is the MN in the DC network,
the first configuration information in the first message sent by the sending unit 702 is configured to indicate whether the security function of each bearer in multiple bearers on an MN side in the DC network is activated or deactivated; or,
the first configuration information in the first message sent by the sending unit 702 is configured to indicate whether the security function of each bearer in multiple bearers on the MN side and SN side in the DC network is activated or deactivated.

In an implementation, under the condition that the first node is the SN in the DC network,
the first configuration information in the first message sent by the sending unit 702 is configured to indicate whether the security function of each bearer in multiple bearers on the SN side in the DC network is activated or deactivated; or,
the first configuration information in the first message sent by the sending unit 702 is configured to indicate whether the security function of each bearer in multiple bearers on the MN side and SN side in the DC network is activated or deactivated.

In an implementation, a respective PDCP PDU corresponding to each bearer in the multiple bearers contains third indication information, and the third indication information is used to indicate whether the security function of the bearer corresponding to the PDCP PDU is in an activated state or a deactivated state.

In an implementation, the security function includes the encryption function and/or the integrity protection function.

Whether the encryption function of the bearer corresponding to the PDCP PDU is in the activated state or the deactivated state is indicated through a first bit in a header of the PDCP PDU; and/or, whether the integrity protection function of the bearer corresponding to the PDCP PDU is in the activated state or the deactivated state is indicated through a second bit in the header of the PDCP PDU.

In an implementation, a respective control PDU is generated for each bearer in the multiple bearers through a PDCP entity, and the control PDU is used to indicate whether the security function of the corresponding bearer is in the activated state or the deactivated state. The security function includes the encryption function and/or the integrity protection function.

Those skilled in the art will appreciate that functions realized by each unit in the device for controlling security function shown in FIG. 7 may be understood with reference to related descriptions about the method for controlling security function. The functions of each unit in the device for controlling security function shown in FIG. 7 may be implemented through a program running in a processor, and may also be implemented through a specific logical circuit.

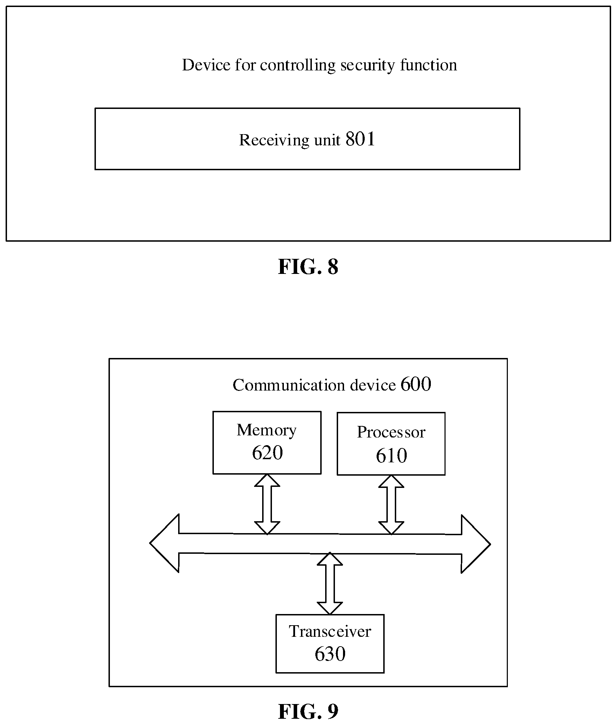

FIG. 8 is a second structure composition diagram of a device for controlling security function according to an embodiment of the disclosure. As shown in FIG. 8, the device includes a receiving unit 801.

The receiving unit 801 is configured to receive a first message sent by a first node. The first message contains first configuration information and the first configuration information is configured to indicate whether a security function of each bearer in multiple bearers is activated or deactivated.

In an implementation, the security function includes an encryption function and/or an integrity protection function.

The first message is an RRC signaling. A respective first indication information and/or second indication information are/is configured for each bearer in the multiple bearers through the RRC signaling. The first indication information is used to indicate whether the encryption function of the bearer is activated or deactivated, and the second indication information is used to indicate whether the integrity protection function of the bearer is activated or deactivated.

In an implementation, the security function includes the encryption function and/or the integrity protection function.

The first message includes a first MAC CE and/or a second MAC CE. Each bit in the first MAC CE is used to configure the respective first indication information for each bearer in the multiple bearers, and the first indication information is used to indicate whether the encryption function of the bearer is activated or deactivated. Each bit in the second MAC CE is used to configure the respective second indication information for each bearer in the multiple bearers, and the second indication information is used to indicate whether the integrity protection function of the bearer is activated or deactivated.

In an implementation, the first MAC CE corresponds to a first logical channel ID, and the first logical channel ID is configured to identify that a type of the first MAC CE is used to configure the first indication information.

The second MAC CE corresponds to a second logical channel ID, and the second logical channel ID is configured to identify that a type of the second MAC CE is used to configure the second indication information.

In an implementation, the security function includes the encryption function and/or the integrity protection function.

The first message is a PDCCH order, and the PDCCH order includes a first bitmap and/or a second bitmap. Each bit in the first bitmap is used to configure the respective first indication information for each bearer in the multiple bearers, and the first indication information is used to indicate whether the encryption function of the bearer is activated or deactivated. Each bit in the second bitmap is used to configure the respective second indication information for each bearer in the multiple bearers, and the second indication information is used to indicate whether the integrity protection function of the bearer is activated or deactivated.

In an implementation, the first node is a node in a standalone network; or,
the first node is an MN in a DC network; or,
the first node is an SN in the DC network.

In an implementation, under the condition that the first node is the MN in the DC network,
the first configuration information in the first message received by the receiving unit 801 is configured to indicate whether the security function of each bearer in multiple bearers on an MN side in the DC network is activated or deactivated; or,
the first configuration information in the first message received by the receiving unit 801 is configured to indicate whether the security function of each bearer in multiple bearers on the MN side and SN side in the DC network is activated or deactivated.

In an implementation, under the condition that the first node is the SN in the DC network,
the first configuration information in the first message received by the receiving unit 801 is configured to indicate whether the security function of each bearer in multiple bearers on the SN side in the DC network is activated or deactivated; or,
the first configuration information in the first message received by the receiving unit 801 is configured to indicate whether the security function of each bearer in the multiple bearers on the MN side and SN side in the DC network is activated or deactivated.

In an implementation, a respective PDCP PDU corresponding to each bearer in the multiple bearers contains third indication information, and the third indication information is used to indicate whether the security function of the bearer corresponding to the PDCP PDU is in an activated state or a deactivated state.

In an implementation, the security function includes the encryption function and/or the integrity protection function.

Whether the encryption function of the bearer corresponding to the PDCP PDU is in the activated state or the deactivated state is indicated through a first bit in a header of the PDCP PDU; and/or, whether the integrity protection function of the bearer corresponding to the PDCP PDU is in the activated state or the deactivated state is indicated through a second bit in the header of the PDCP PDU.

In an implementation, a respective control PDU is generated for each bearer in the multiple bearers through a PDCP entity, and the control PDU is configured to indicate whether the security function of the corresponding bearer is in the activated state or the deactivated state. The security function includes the encryption function and/or the integrity protection function.

Those skilled in the art will appreciate that functions realized by each unit in the device for controlling security function shown in FIG. 8 may be understood with reference to related descriptions about the method for controlling security function. The functions of each unit in the device for controlling security function shown in FIG. 8 may be implemented through a program running in a processor, and may also be implemented through a specific logical circuit.

FIG. 9 is a schematic structure diagram of a communication device 600 according to an embodiment of the disclosure. The communication device may be a terminal device and may also be a network device. The communication device 600 shown in FIG. 9 includes a processor 610, and the processor 610 may call and run a computer program in a memory to implement the method in the embodiments of the disclosure.

Optionally, as shown in FIG. 9, the communication device 600 may further include the memory 620. The processor 610 may call and run the computer program in the memory 620 to implement the methods in the embodiments of the disclosure.

The memory 620 may be an independent device independent of the processor 610 and may also be integrated into the processor 610.

Optionally, as shown in FIG. 9, the communication device 600 may further include a transceiver 630, and the processor 610 may control the transceiver 630 to communicate with another device. Specifically, the processor 610 may control the transceiver 630 to send information or data to the other device or to receive information or data from the other device.

The transceiver 630 may include a transmitter and a receiver. The transceiver 630 may further include antennae, and the number of the antennae may be one or more.

Optionally, the communication device 600 may specifically be a network device in the embodiment of the disclosure, and the communication device 600 may be configured to implement corresponding flows implemented by the network device in each method in the embodiments of the disclosure. For simplicity, elaborations are omitted herein.

Optionally, the communication device 600 may specifically be the mobile terminal/terminal device in the embodiments of the disclosure, and the communication device 600 may be configured to implement corresponding flows implemented by the mobile terminal/terminal device in each method in the embodiments of the disclosure. For simplicity, elaborations are omitted herein.

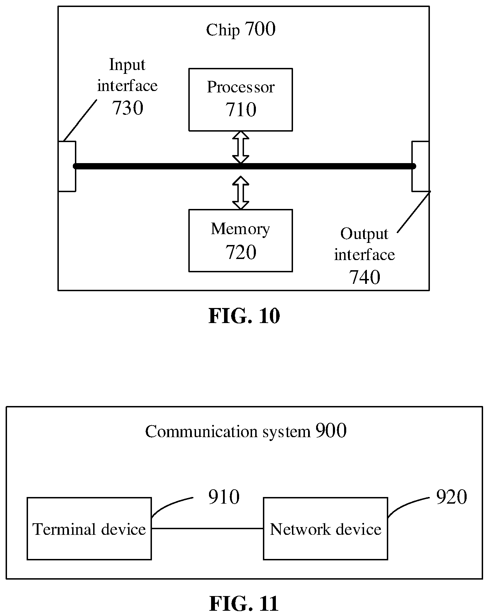

FIG. 10 is a schematic structure diagram of a chip according to an embodiment of the disclosure. The chip 700 shown in FIG. 10 includes a processor 710, and the processor 710 may call and run a computer program in a memory to implement the methods in the embodiments of the disclosure.

Optionally, as shown in FIG. 10, the chip 700 may further include the memory 720. The processor 710 may call and run the computer program in the memory 720 to implement the methods in the embodiments of the disclosure.

The memory 720 may be an independent device independent of the processor 710 and may also be integrated into the processor 710.

Optionally, the chip 700 may further include an input interface 730. The processor 710 may control the input interface 730 to communicate with another device or chip, such as acquiring information or data from the other device or chip.

Optionally, the chip 700 may further include an output interface 740. The processor 710 may control the output interface 740 to communicate with the other device or chip, such as outputting information or data to the other device or chip.

Optionally, the chip may be applied to the network device in the embodiments of the disclosure, and the chip may implement corresponding flows implemented by the network device in each method in the embodiments of the disclosure. For simplicity, elaborations are omitted herein.

Optionally, the chip may be applied to the mobile terminal/terminal device in the embodiment of the disclosure, and the chip may implement corresponding flows implemented by the mobile terminal/terminal device in each method in the embodiment of the disclosure. For simplicity, elaborations are omitted herein.

It is to be understood that the chip mentioned in the embodiment of the disclosure may also be called a system-level chip, a system chip, a chip system or a system on chip, etc.

FIG. 11 is a schematic block diagram of a communication system 900 according to an embodiment of the disclosure. As shown in FIG. 11, a communication system 900 includes a terminal device 910 and a network device 920.

The terminal device 910 may be configured to implement corresponding functions implemented by the terminal device in the above methods, and the network device 920 may be configured to implement corresponding functions implemented by the network device in the above methods. For simplicity, elaborations are omitted herein.

It is to be understood that the processor in the embodiment of the disclosure may be an integrated circuit chip and has a signal processing capability. In an implementation process, each step in the method embodiments may be completed by an integrated logical circuit in a hardware form in the processor or an instruction in a software form. The processor may be a general purpose processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, step and logical block diagram disclosed in the embodiments of the disclosure may be implemented or executed. The general purpose processor may be a microprocessor or the processor may also be any conventional processor and the like. The steps in the method disclosed in combination with the embodiments of the disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and completes the steps in the method in combination with the hardware.

It can be understood that the memory in the embodiment of the disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. In an exemplary but non-limiting embodiment, RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

It is to be understood that the memory is exemplarily but unlimitedly described. For example, the memory in the embodiments of the disclosure may also be an SRAM, a DRAM, an SDRAM, a DDR SDRAM, an ESDRAM, an SLDRAM and a DR RAM. That is, the memory in the embodiments of the disclosure is intended to include, but not limited to, memories of these and any other proper types.

The embodiments of the disclosure also provide a computer-readable storage medium, which is configured to store a computer program.

Optionally, the computer-readable storage medium may be applied to a network device in the embodiments of the disclosure, and the computer program enables a computer to execute corresponding flows implemented by the network device in each method in the embodiments of the disclosure. For simplicity, elaborations are omitted herein.

Optionally, the computer-readable storage medium may be applied to a mobile terminal/terminal device in the embodiments of the disclosure, and the computer program enables a computer to execute corresponding flows implemented by the mobile terminal/terminal device in each method in the embodiments of the disclosure. For simplicity, elaborations are omitted herein.

The embodiments of the disclosure also provide a computer program product, which includes a computer program instruction.

Optionally, the computer program product may be applied to a network device in the embodiments of the disclosure, and the computer program instruction enables a computer to execute corresponding flows implemented by the network device in each method in the embodiments of the disclosure. For simplicity, elaborations are omitted herein.

Optionally, the computer program product may be applied to a mobile terminal/terminal device in the embodiments of the disclosure, and the computer program instruction enables the computer to execute corresponding flows implemented by the mobile terminal/terminal device in each method in the embodiments of the disclosure. For simplicity, elaborations are omitted herein.

The embodiments of the disclosure also provide a computer program.

Optionally, the computer program may be applied to a network device in the embodiments of the disclosure, and the computer program, when being executed in a computer, causes the computer to execute corresponding flows implemented by the network device in each method in the embodiments of the disclosure. For simplicity, elaborations are omitted herein.

Optionally, the computer program may be applied to a mobile terminal/terminal device in the embodiments of the disclosure, and the computer program, when being executed in the computer, causes the computer to execute corresponding flows implemented by the mobile terminal/terminal device in each method in the embodiments of the disclosure. For simplicity, elaborations are omitted herein.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical, mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the disclosure. The abovementioned storage medium includes: various media capable of storing program codes such as a U disk, a mobile hard disk, a ROM, a RAM, a magnetic disk or an optical disk.

Described above are merely specific embodiments of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for controlling security function, comprising:
acquiring, by a first node, a security policy configuration information, and determining whether a security function of each bearer in a plurality of bearers is required to be activated or deactivated based on the security policy configuration information; and
sending, by the first node, a first message to a terminal, wherein the first message contains a first configuration information and the first configuration information is configured to indicate whether the security function of each bearer in the plurality of bearers is activated or deactivated.

2. The method of claim 1, wherein the security function comprises at least one of an encryption function or an integrity protection function; and
the first message is a Radio Resource Control (RRC) signaling, at least one of a respective first indication information or a respective second indication information is configured for each bearer in the plurality of bearers through the RRC signaling, the first indication information is used to indicate whether the encryption function of the bearer is activated or deactivated, and the second indication information is used to indicate whether the integrity protection function of the bearer is activated or deactivated.

3. The method of claim 1, wherein the security function comprises at least one of an encryption function or an integrity protection function; and
the first message comprises at least one of a first Media Access Control (MAC) Control Element (CE) or a second MAC CE, each bit in the first MAC CE is used to configure a respective first indication information for each bearer in the plurality of bearers, the first indication information is used to indicate whether the encryption function of the bearer is activated or deactivated, each bit in the second MAC CE is used to configure a respective second indication information for each bearer in the plurality of bearers, and the second indication information is used to indicate whether the integrity protection function of the bearer is activated or deactivated.

4. The method of claim 3, wherein
the first MAC CE corresponds to a first logical channel Identifier (ID), and the first logical channel ID is configured to identify that a type of the first MAC CE is used to configure the first indication information; and
the second MAC CE corresponds to a second logical channel ID, and the second logical channel ID is configured to identify that a type of the second MAC CE is used to configure the second indication information.

5. The method of claim 1, wherein the security function comprises at least one of an encryption function or an integrity protection function; and
the first message is a Physical Downlink Control Channel (PDCCH) order, the PDCCH order comprises at least one of a first bitmap or a second bitmap, each bit in the first bitmap is used to configure a respective first indication information for each bearer in the plurality of bearers, the first indication information is used to indicate whether the encryption function of the bearer is activated or deactivated, each bit in the second bitmap is used to configure a respective second indication information for each bearer in the plurality of bearers, and the second indication information is used to indicate whether the integrity protection function of the bearer is activated or deactivated.

6. The method of any one of claims 1 to 5, wherein
the first node is a node in a standalone network; or,
the first node is a Master Node (MN) in a Dual Connectivity (DC) network; or,
the first node is a Secondary Node (SN) in the DC network.

7. The method of claim 6, wherein
under the condition that the first node is a node in the standalone network or the MN in the DC network, the first node acquires the security policy configuration information from a Core Network (CN) element;
under the condition that the first node is the SN in the DC network, the first node receives the security policy configuration information forwarded by the MN in the DC network and sent from the CN element; and
the security policy configuration information is configured to indicate at least one of a Protocol Data Unit (PDU) session requiring the security function to be activated or a PDU session requiring the security function to be deactivated, the PDU session forming a correspondence with at least one bearer.

8. The method of claim 6 or 7, wherein, under the condition that the first node is the MN in the DC network,
the first configuration information in the first message sent by the first node is configured to indicate whether the security function of each bearer in a plurality of bearers on an MN side in the DC network is activated or deactivated; or,
the first configuration information in the first message sent by the first node is configured to indicate whether the security function of each bearer in a plurality of bearers on the MN side and SN side in the DC network is activated or deactivated.

9. The method of claim 6 or 7, wherein, under the condition that the first node is the SN in the DC network,
the first configuration information in the first message sent by the first node is configured to indicate whether the security function of each bearer in a plurality of bearers on an SN side in the DC network is activated or deactivated; or,
the first configuration information in the first message sent by the first node is configured to indicate whether the security function of each bearer in a plurality of bearers on an MN side and SN side in the DC network is activated or deactivated.

10. The method of any one of claims 1 to 9, wherein a respective Packet Data Convergence Protocol (PDCP) PDU corresponding to each bearer in the plurality of bearers contains a third indication information, and the third indication information is used to indicate whether the security function of the bearer corresponding to the PDCP PDU is in an activated state or a deactivated state.

11. The method of claim 10, wherein the security function comprises at least one of an encryption function or an integrity protection function;
whether the encryption function of the bearer corresponding to the PDCP PDU is in the activated state or the deactivated state is indicated through a first bit in a header of the PDCP PDU; and/or, whether the integrity protection function of the bearer corresponding to the PDCP PDU is in the activated state or the deactivated state is indicated through a second bit in the header of the PDCP PDU.

12. The method of any one of claims 1 to 11, wherein a respective control PDU is generated for each bearer in the plurality of bearers through a PDCP entity, and the control PDU is configured to indicate whether the security function of the corresponding bearer is in an activated state or a deactivated state, and wherein the security function comprises at least one of an encryption function or an integrity protection function.

13. A method for controlling security function, comprising:
receiving, by a terminal, a first message from a first node, wherein the first message contains a first configuration information and the first configuration information is configured to indicate whether a security function of each bearer in a plurality of bearers is activated or deactivated.

14. The method of claim 13, wherein the security function comprises at least one of an encryption function or an integrity protection function;
the first message is a Radio Resource Control (RRC) signaling, at least one of a respective first indication information or a respective second indication information is configured for each bearer in the plurality of bearers through the RRC signaling, the first indication information is used to indicate whether the encryption function of the bearer is activated or deactivated, and the second indication information is used to indicate whether the integrity protection function of the bearer is activated or deactivated.

15. The method of claim 13, wherein the security function comprises at least one of an encryption function or an integrity protection function;
the first message comprises at least one of a first Media Access Control (MAC) Control Element (CE) or a second MAC CE, each bit in the first MAC CE is used to configure a respective first indication information for each bearer in the plurality of bearers, the first indication information is used to indicate whether the encryption function of the bearer is activated or deactivated, each bit in the second MAC CE is used to configure a respective second indication information for each bearer in the plurality of bearers, and the second indication information is used to indicate whether the integrity protection function of the bearer is activated or deactivated.

16. The method of claim 15, wherein
the first MAC CE corresponds to a first logical channel Identifier (ID), and the first logical channel ID is configured to identify that a type of the first MAC CE is used to configure the first indication information; and
the second MAC CE corresponds to a second logical channel ID, and the second logical channel ID is configured to identify that a type of the second MAC CE is used to configure the second indication information.

17. The method of claim 13, wherein the security function comprises at least one of an encryption function or an integrity protection function;
the first message is a Physical Downlink Control Channel (PDCCH) order, the PDCCH order comprises at least one of a first bitmap or a second bitmap, each bit in the first bitmap is used to configure a respective first indication information for each bearer in the plurality of bearers, the first indication information is used to indicate whether the encryption function of the bearer is activated or deactivated, each bit in the second bitmap is used to configure a respective second indication information for each bearer in the plurality of bearers, and the second indication information is used to indicate whether the integrity protection function of the bearer is activated or deactivated.

18. The method of any one of claims 13 to 17, wherein
the first node is a node in a standalone network; or,
the first node is a Master Node (MN) in a Dual Connectivity (DC) network; or,
the first node is a Secondary Node (SN) in the DC network.

19. The method of claim 18, wherein, under the condition that the first node is the MN in the DC network,
the first configuration information in the first message sent by the first node is configured to indicate whether the security function of each bearer in a plurality of bearers on an MN side in the DC network is activated or deactivated; or,
the first configuration information in the first message sent by the first node is configured to indicate whether the security function of each bearer in a plurality of bearers on the MN side and SN side in the DC network is activated or deactivated.

20. The method of claim 18, wherein, under the condition that the first node is the SN in the DC network,
the first configuration information in the first message sent by the first node is configured to indicate whether the security function of each bearer in a plurality of bearers on an SN side in the DC network is activated or deactivated; or,
the first configuration information in the first message sent by the first node is configured to indicate whether the security function of each bearer in a plurality of bearers on an MN side and SN side in the DC network is activated or deactivated.

21. The method of any one of claims 13 to 20, wherein a respective Packet Data Convergence Protocol (PDCP) Protocol Data Unit (PDU) corresponding to each bearer in the plurality of bearers contains a third indication information, and the third indication information is used to indicate whether the security function of the bearer corresponding to the PDCP PDU is in an activated state or a deactivated state.

22. The method of claim 21, wherein the security function comprises at least one of an encryption function or an integrity protection function;
whether the encryption function of the bearer corresponding to the PDCP PDU is in the activated state or the deactivated state is indicated through a first bit in a header of the PDCP PDU; and/or, whether the integrity protection function of the bearer corresponding to the PDCP PDU is in the activated state or the deactivated state is indicated through a second bit in the header of the PDCP PDU.

23. The method of any one of claims 13 to 22, wherein a respective control PDU is generated for each bearer in the plurality of bearers through a PDCP entity, and the control PDU is configured to indicate whether the security function of the corresponding bearer is in an activated state or a deactivated state, and wherein the security function comprises at least one of an encryption function or an integrity protection function.

24. A device for controlling security function, comprising:
an acquisition unit, configured to acquire a security policy configuration information and determine whether a security function of each bearer in a plurality of bearers is required to be activated or deactivated based on the security policy configuration information; and
a sending unit, configured to send a first message to a terminal, wherein the first message contains a first configuration information and the first configuration information is configured to indicate whether the security function of each bearer in the plurality of bearers is activated or deactivated.

25. The device of claim 24, wherein the security function comprises at least one of an encryption function or an integrity protection function; and
the first message is a Radio Resource Control (RRC) signaling, at least one of a respective first indication information or a respective second indication information is configured for each bearer in the plurality of bearers through the RRC signaling, the first indication information is used to indicate whether the encryption function of the bearer is activated or deactivated, and the second indication information is used to indicate whether the integrity protection function of the bearer is activated or deactivated.

26. The device of claim 24, wherein the security function comprises at least one of an encryption function or an integrity protection function; and
the first message comprises at least one of a first Media Access Control (MAC) Control Element (CE) or a second MAC CE, each bit in the first MAC CE is used to configure a respective first indication information for each bearer in the plurality of bearers, the first indication information is used to indicate whether the encryption function of the bearer is activated or deactivated, each bit in the second MAC CE is used to configure a respective second indication information for each bearer in the plurality of bearers, and the second indication information is used to indicate whether the integrity protection function of the bearer is activated or deactivated.

27. The device of claim 26, wherein
the first MAC CE corresponds to a first logical channel Identifier (ID), and the first logical channel ID is configured to identify that a type of the first MAC CE is used to configure the first indication information; and
the second MAC CE corresponds to a second logical channel ID, and the second logical channel ID is configured to identify that a type of the second MAC CE is used to configure the second indication information.

28. The device of claim 24, wherein the security function comprises at least one of an encryption function or an integrity protection function; and
the first message is a Physical Downlink Control Channel (PDCCH) order, the PDCCH order comprises at least one of a first bitmap or a second bitmap, each bit in the first bitmap is used to configure a respective first indication information for each bearer in the plurality of bearers, the first indication information is used to indicate whether the encryption function of the bearer is activated or deactivated, each bit in the second bitmap is used to configure a respective second indication information for each bearer in the plurality of bearers, and the second indication information is used to indicate whether the integrity protection function of the bearer is activated or deactivated.

29. The device of any one of claims 24 to 28, wherein
a first node is a node in a standalone network; or,
the first node is a Master Node (MN) in a Dual Connectivity (DC) network; or,
the first node is a Secondary Node (SN) in the DC network.

30. The device of claim 29, wherein
under the condition that the first node is a node in the standalone network or the MN in the DC network, the acquisition unit is configured to acquire the security policy configuration information from a Core Network (CN) element;
under the condition that the first node is the SN in the DC network, the acquisition unit is configured to receive the security policy configuration information forwarded by the MN in the DC network and sent from the CN element; and
the security policy configuration information is configured to indicate at least one of a Protocol Data Unit (PDU) session requiring the security function to be activated or a PDU session requiring the security function to be deactivated, the PDU session forming a correspondence with at least one bearer.

31. The device of claim 29 or 30, wherein, under the condition that the first node is the MN in the DC network,
the first configuration information in the first message sent by the sending unit is configured to indicate whether the security function of each bearer in a plurality of bearers on an MN side in the DC network is activated or deactivated; or,
the first configuration information in the first message sent by the sending unit is configured to indicate whether the security function of each bearer in a plurality of bearers on the MN side and SN side in the DC network is activated or deactivated.

32. The device of claim 29 or 30, wherein, under the condition that the first node is the SN in the DC network,
the first configuration information in the first message sent by the sending unit is configured to indicate whether the security function of each bearer in a plurality of bearers on an SN side in the DC network is activated or deactivated; or,
the first configuration information in the first message sent by the sending unit is configured to indicate whether the security function of each bearer in a plurality of bearers on an MN side and SN side in the DC network is activated or deactivated.

33. The device of any one of claims 24 to 32, wherein a respective Packet Data Convergence Protocol (PDCP) Protocol Data Unit (PDU) corresponding to each bearer in the plurality of bearers contains a third indication information, and the third indication information is used to indicate whether the security function of the bearer corresponding to the PDCP PDU is in an activated state or a deactivated state.

34. The device of claim 33, wherein the security function comprises at least one of an encryption function or an integrity protection function; and
whether the encryption function of the bearer corresponding to the PDCP PDU is in the activated state or the deactivated state is indicated through a first bit in a header of the PDCP PDU; and/or, whether the integrity protection function of the bearer corresponding to the PDCP PDU is in the activated state or the deactivated state is indicated through a second bit in the header of the PDCP PDU.

35. The device of any one of claims 24 to 34, wherein a respective control PDU is generated for each bearer in the plurality of bearers through a PDCP entity, and the control PDU is configured to indicate whether the security function of the corresponding bearer is in an activated state or a deactivated state, and wherein the security function comprises at least one of an encryption function or an integrity protection function.

36. A device for controlling security function, comprising:
a receiving unit, configured to receive a first message from a first node, wherein the first message contains a first configuration information and the first configuration information is configured to indicate whether a security function of each bearer in a plurality of bearers is activated or deactivated.

37. The device of claim 36, wherein the security function comprises at least one of an encryption function or an integrity protection function; and
the first message is a Radio Resource Control (RRC) signaling, at least one of a respective first indication information or a respective second indication information is configured for each bearer in the plurality of bearers through the RRC signaling, the first indication information is used to indicate whether the encryption function of the bearer is activated or deactivated, and the second indication information is used to indicate whether the integrity protection function of the bearer is activated or deactivated.

38. The device of claim 36, wherein the security function comprises at least one of an encryption function or an integrity protection function; and
the first message comprises at least one of a first Media Access Control (MAC) Control Element (CE) or a second MAC CE, each bit in the first MAC CE is used to configure a respective first indication information for each bearer in the plurality of bearers, the first indication information is used to indicate whether the encryption function of the bearer is activated or deactivated, each bit in the second MAC CE is used to configure a respective second indication information for each bearer in the plurality of bearers, and the second indication information is used to indicate whether the integrity protection function of the bearer is activated or deactivated.

39. The device of claim 38, wherein
the first MAC CE corresponds to a first logical channel Identifier (ID), and the first logical channel ID is configured to identify that a type of the first MAC CE is used to configure the first indication information; and
the second MAC CE corresponds to a second logical channel ID, and the second logical channel ID is configured to identify that a type of the second MAC CE is used to configure the second indication information.

40. The device of claim 36, wherein the security function comprises at least one of an encryption function or an integrity protection function; and
the first message is a Physical Downlink Control Channel (PDCCH) order, the PDCCH order comprises at least one of a first bitmap or a second bitmap, each bit in the first bitmap is used to configure a respective first indication information for each bearer in the plurality of bearers, the first indication information is used to indicate whether the encryption function of the bearer is activated or deactivated, each bit in the second bitmap is used to configure a respective second indication information for each bearer in the plurality of bearers, and the second indication information is used to indicate whether the integrity protection function of the bearer is activated or deactivated.

41. The device of any one of claims 36 to 40, wherein
the first node is a node in a standalone network; or,
the first node is a Master Node (MN) in a Dual Connectivity (DC) network; or,
the first node is a Secondary Node (SN) in the DC network.

42. The device of claim 41, wherein, under the condition that the first node is the MN in the DC network,
the first configuration information in the first message received by the receiving unit is configured to indicate whether the security function of each bearer in a plurality of bearers on an MN side in the DC network is activated or deactivated; or,
the first configuration information in the first message received by the receiving unit is configured to indicate whether the security function of each bearer in a plurality of bearers on the MN side and SN side in the DC network is activated or deactivated.

43. The device of claim 41, wherein, under the condition that the first node is the SN in the DC network,
the first configuration information in the first message received by the receiving unit is configured to indicate whether the security function of each bearer in a plurality of bearers on an SN side in the DC network is activated or deactivated; or,
the first configuration information in the first message received by the receiving unit is configured to indicate whether the security function of each bearer in a plurality of bearers on an MN side and SN side in the DC network is activated or deactivated.

44. The device of any one of claims 36 to 43, wherein a respective Packet Data Convergence Protocol (PDCP) Protocol Data Unit (PDU) corresponding to each bearer in the plurality of bearers contains a third indication information, and the third indication information is used to indicate whether the security function of the bearer corresponding to the PDCP PDU is in an activated state or a deactivated state.

45. The device of claim 44, wherein the security function comprises at least one of an encryption function or an integrity protection function; and
whether the encryption function of the bearer corresponding to the PDCP PDU is in the activated state or the deactivated state is indicated through a first bit in a header of the PDCP PDU; and/or, whether the integrity protection function of the bearer corresponding to the PDCP PDU is in the activated state or the deactivated state is indicated through a second bit in the header of the PDCP PDU.

46. The device of any one of claims 36 to 45, wherein a respective control PDU is generated for each bearer in the plurality of bearers through a PDCP entity, and the control PDU is configured to indicate whether the security function of the corresponding bearer is in an activated state or a deactivated state, and wherein the security function comprises at least one of an encryption function or an integrity protection function.

47. A network device, comprising a processor and a memory, wherein the memory is configured to store a computer program, and the processor is configured to call and run the computer program stored in the memory to execute the method of any one of claims 1 to 12.

48. A terminal device, comprising a processor and a memory, wherein the memory is configured to store a computer program, and the processor is configured to call and run the computer program stored in the memory to execute the method of any one of claims 13 to 23.

49. A chip, comprising a processor, configured to call and run a computer program in a memory to enable a device installed with the chip to execute the method of any one of claims 1 to 12 or the method of any one of claims 13 to 23.

50. A computer-readable storage medium having stored therein a computer program which, when being executed by a computer, causes the computer to execute the method of any one of claims 1 to 12 or the method of any one of claims 13 to 23.

51. A computer program product, comprising a computer program instruction, the computer program instruction enabling a computer to execute the method of any one of claims 1 to 12 or the method of any one of claims 13 to 23.

52. A computer program, enabling a computer to execute the method of any one of claims 1-12 or the method of any one of claims 13 to 23.
